# EUROPÄISCHE PATENTANMELDUNG

(11) **EP 4 272 937 A1**
(43) Veröffentlichungstag der Anmeldung: **08.11.2023**
(21) Anmeldenummer: 23170734.0
(22) Anmeldetag: 28.04.2023
(51) Int. Cl.: B29C 70/20, B29C 70/22, B60B 5/02

(54) **FAHRZEUGFELGE MIT EINEM AUS MINDESTENS EINER SUBPREFORM AUSGEBILDETEM FLANSCHBEREICH; UND VERFAHREN ZUM HERSTELLEN EINES FELGENKÖRPERS**

(30) Priorität: 02.05.2022 DE 102022110699
(71) Anmelder: Munich Composites GmbH, 85640 Putzbrunn (DE)
(72) Erfinder: Rüger, Olaf, 85640 Putzbrunn (DE); Schranz, Christoph, 85640 Putzbrunn (DE)
(74) Vertreter: Winter, Brandl - Partnerschaft mbB

(57) **Zusammenfassung**

Die Erfindung betrifft eine Fahrzeugfelge (1) mit einem Felgenkörper (2) aus Faserverbundmaterial, wobei der Felgenkörper (2) wiederum eine, ein erstes axiales Ende (3a) bildende, erste Subpreform (4) und eine in einem Verbindungshohlraum (5) der ersten Subpreform (4) aufgenommene, von der ersten Subpreform (4) zu einem, dem ersten axialen Ende (3a) gegenüberliegenden, zweiten axialen Ende (3b) verlaufende zweite Subpreform (6) aufweist, wobei ferner ein axial zwischen den axialen Enden (3a, 3b) ausgebildeter, radial nach innen abstehender Flanschbereich (7) zumindest teilweise aus einer mit der ersten Subpreform (4) und / oder der zweiten Subpreform (6) verbundenen, dritten Subpreform (8) gebildet ist. Die Erfindung betrifft auch ein Verfahren zum Herstellen einer Fahrzeugfelge (1).

## Beschreibung

Die Erfindung betrifft eine Fahrzeugfelge mit einem üblicherweise hohlen, vorzugsweise (rotations-)symmetrischen Felgenkörper aus Faserverbundmaterial.

Aus dem Stand der Technik sind grundsätzlich Fahrzeugfelgen mit einem Felgenkörper aus Faserverbundmaterial bekannt. Diese Felgenkörper weisen üblicherweise Gewebe, Gelege oder Geflechte aufweisend Kohlefasern, Glasfasern oder Aramidfasern, vorgetränkt oder später injiziert mit Harz auf. Nach einem Aushärten wird eine Fahrzeugfelge, aufweisend diesen Felgenkörper, zur Verfügung gestellt.

Es ist auch bekannt, dass der aus Faserverbundmaterial gefertigte Felgenkörper mit einem weiteren Bauteil verbunden werden kann, das zur Befestigung an der Radnabe eines Fahrzeugs, wie eines Pkws, eines Lkws oder eines anderen Nutzfahrzeuges, aber auch von bspw. motorgetriebenen Zweirädern, vorgesehen ist. Oftmals ist dieses Bauteil als Stern ausgebildet und üblicherweise aus Metall bzw. einer Metalllegierung, wie einer Aluminiumlegierung, ausgeformt.

Bisher ist es jedoch sehr aufwändig und kostenintensiv die besagten (CFK-)Felgenkörper herzustellen. Auch sind solche Felgenkörper bisher nicht so hoch belastbar, wie gewünscht. Insbesondere thermische Belastungen, Drücke, aber auch Zentripetalkräfte müssen noch besser ertragen werden. Auch soll ein solcher Felgenkörper extrem steif und leicht sein.

Diese Aufgabe wird bei einer Fahrzeugfelge mit den Merkmalen des Anspruchs 1 gelöst, nämlich durch eine Fahrzeugfelge mit einem üblicherweise hohlen, vorzugsweise (rotations-)symmetrischen Felgenkörper aus Faserverbundmaterial, wobei der Felgenkörper wiederum eine, ein erstes axiales Ende bildende, erste Subpreform und eine in einem Verbindungshohlraum der ersten Subpreform aufgenommene, von der ersten Subpreform zu einem, dem ersten axialen Ende gegenüberliegenden, zweiten axialen Ende verlaufende zweite Subpreform aufweist, wobei ferner ein axial zwischen den axialen Enden ausgebildeter, radial nach innen abstehender Flanschbereich zumindest teilweise aus einer mit der ersten Subpreform und / oder der zweiten Subpreform verbundenen, dritten Subpreform gebildet ist.

Aufgrund der Möglichkeiten mehrere unterschiedliche Subpreformen zu nutzen, können die Arbeitsschritte parallel ablaufen, wodurch Zeit gespart wird. Durch die den Flanschbereich bildende weitere (dritte) Subpreform wird ein kritischer Anbindungsbereich für einen Felgenstern möglichst steif und belastbar ausgebildet.

Die Erfindung hat sich auch zur Aufgabe gesetzt, ein besonders schnelles und verlässliches, d. h. ausfallabgesichertes Verfahren zum Herstellen eines Felgenkörpers aus Faserverbundmaterial für eine Fahrzeugfelge zur Verfügung zu stellen.

Diese Aufgabe wird erfindungsgemäß mit einem Verfahren aufweisend die Merkmale des Anspruchs 11 gelöst.

Ein solches Verfahren zum Herstellen eines Felgenkörpers aus Faserverbundmaterial für eine Fahrzeugfelge ist dadurch gekennzeichnet, dass eine eine Verstärkungsfaser (vorzugsweise kohlefaser-, glasfaser- und/oder aramidfaserumfassendes NCF (non-crimp fabric / Gelege) aufweisende erste Subpreform unter Ausbildung eines ersten axialen Endes des Felgenkörpers angeordnet wird und eine zweite Subpreform (aufweisend eine gleiche oder ähnliche Verstärkungsfaser wie die erste Subpreform) in einen Verbindungshohlraum der ersten Subpreform eingesetzt wird, wobei sich die zweite Subpreform von der ersten Subpreform axial zu einem zweiten axialen Ende des Felgenkörpers weg erstreckt, und wobei eine dritte Subpreform (aufweisend eine gleiche oder ähnliche Verstärkungsfaser wie die erste Subpreform) an die erste Subpreform und/oder die zweite Subpreform angebracht wird, sodass diese einen radial nach innen abstehenden, zur Anbindung eines Felgensterns vorbereiteten Flanschbereich mit ausbildet.

Vorteilhafte Weiterbildungen der Fahrzeugfelge sind in den Unteransprüchen beansprucht. Vorteilhafte Weiterbildungen des Verfahrens sind ebenfalls in den Unteransprüchen beansprucht. Diese vorteilhaften Weiterbildungen werden nachfolgend näher erläutert.

Demnach ist es auch von Vorteil, wenn der Flanschbereich aus einer weiteren vierten Subpreform mit ausgebildet ist. Dadurch wird die Festigkeit des Flanschbereiches weiter gesteigert.

Zudem ist es vorteilhaft, wenn die dritte Subpreform und die vierte Subpreform jeweils einen radial nach innen vorspringenden, den Flanschbereich unmittelbar mit ausbildenden Kragen aufweisen. Dadurch können die dritte und vierte Subpreform möglichst einfach ausgebildet werden, wodurch der Montageaufwand möglichst geringgehalten wird.

Für eine einfache Herstellung ist es auch zuträglich, wenn die dritte Subpreform und / oder die vierte Subpreform einen (im Wesentlichen axial vorspringenden) Ringabschnitt aufweisen / aufweist, wobei der jeweilige Ringabschnitt (vorzugsweise direkt) mit der ersten Subpreform und / oder der zweiten Subpreform verbunden ist.

Verlaufen die Ringabschnitte der dritten Subpreform und der vierten Subpreform zu einander entgegengesetzte axialen Richtungen von dem Flanschbereich aus / voneinander weg, wird die Festigkeit des Flanschbereiches weiter erhöht.

Des Weiteren ist es von Vorteil, wenn die dritte Subpreform in dem Verbindungshohlraum der ersten Subpreform mit angeordnet ist. Auch dadurch wird die Festigkeit des Felgenkörpers geschickt erhöht, ohne zusätzliche Befestigungsmittel einsetzen zu müssen.

Weist die erste Subpreform einen radial nach innen abstehenden Kragen auf, der den Flanschbereich mit ausbildet, wird die Festigkeit des Flanschbereiches ebenfalls gesteigert.

Ferner ist es zur Umsetzung einer möglichst dauerfesten Hybridfelge vorteilhaft, wenn ein aus Metall, vorzugsweise einer Leichtmetalllegierung, wie einer Aluminiumlegierung, bestehender Felgenstern mittels einer Schraubverbindung (direkt) an dem Flanschbereich befestigt ist.

Für eine festigkeitsoptimierte Anbringung des Felgensterns ist es auch vorteilhaft, wenn der Flanschbereich an einer Stelle von Schraubenaufnahmelöchern durchdrungen ist, an der sich die Krägen der dritten Subpreform sowie der vierten Subpreform (sowie weiter bevorzugt auch der Kragen der ersten Subpreform) radial überlappen.

Zudem ist es von Vorteil, wenn in einem Ringraum zwischen der zweiten Subpreform einerseits sowie der dritten Subpreform und/oder der vierten Subpreform andererseits ein Füllkern (vorzugsweise in Form eines Faserbündels) eingelegt ist.

Für eine ausreichende Stabilität ist es auch von Vorteil, wenn zu dem zweiten axialen Ende eine, dieses zweite axiale Ende unmittelbar mit ausbildende, fünfte Subpreform mit der zweiten Subpreform verbunden ist. Die zweite Subpreform ist dabei weiter bevorzugt in einem Verbindungshohlraum der fünften Subpreform eingesetzt / aufgenommen und dort mit ihr verbunden.

So ist es auch von Vorteil, wenn die zweite Subpreform in den beiden Verbindungshohlräumen an der ersten Subpreform und der fünften Subpreform insbesondere einstückig / integral befestigt / angebracht ist. Eine gute Dauerhaltbarkeit ist dann gewährleistet.

Wenn alle Subpreformen durch dasselbe Harz / Harzgemisch durchsetzt sind, so wird ein zusammenhängendes, steifes, aber besonders leichtes Bauteil möglich.

Um die Kosten bei trotzdem hoher Belastbarkeit des Endproduktes niedrig zu halten, hat es sich bewährt, wenn die erste Subpreform und/oder die zweite Subpreform und/oder die dritte Subpreform und/oder die vierte Subpreform und/oder die fünfte Subpreform ein NCF aufweisen / aufweist oder vollständig daraus aufgebaut sind / ist.

Unter einem NCF wird ein "non-crimp fabric" verstanden. Dies ist ein Flächengebilde, das aus einer oder mehreren Lagen von parallel verlaufenden gestreckten Fäden besteht. An den Kreuzungspunkten werden die Fäden üblicherweise fixiert. Die Fixierung erfolgt entweder durch Stoffschluss oder mechanisch durch Reibung und/oder Formschluss.

Es existieren folgende Arten von Fadengelegen:
- monoaxiale oder unidirektionale Fadengelege, die durch das Fixieren einer Schar von parallelen Fäden entstehen;
- biaxiale Fadengelege, bei denen zwei Scharen von parallelen Fäden in Richtung von zwei Achsen fixiert werden;
- multiaxiale Fadengelege, wobei mehrere Scharen aus parallelen Fäden in Richtung verschiedener Achsen fixiert werden.

Die Fadenlagen bei mehrlagigen Gelegen können alle unterschiedliche Orientierung aufweisen, auch aus unterschiedlichen Fadendichten und unterschiedlichen Fadenfeinheiten bestehen. Im Vergleich zu Geweben haben Gelege als Verstärkungsstrukturen bekanntermaßen in Faser-Kunststoff-Verbunden, wobei dies das grundsätzliche technische Gebiet ist, auf dem die Erfindung angeordnet ist, bessere mechanische Eigenschaften, da die Fäden in gestreckter Form vorliegen und damit keine zusätzliche Strukturdehnung vorliegt und die Ausrichtung der Fäden speziell für den jeweiligen Anwendungsfall definiert werden kann.

Um besonders hochbelastbare Fahrzeugfelgen mit entsprechendem Felgenkörper herstellen zu können, hat es sich bewährt, wenn das NCF ein monoaxiales / unidirektionales, oder biaxiales (z. B. +/- 45°-Fasern enthaltendes) oder multiaxiales Gelege, vorzugsweise aus Kohlefasern, Glasfasern oder Aramidfasern ist.

Besonders hohe Kräfte bei niedrigem Gewicht lassen sich durch den Felgenkörper dann aufnehmen, wenn die erste Subpreform und/oder die zweite Subpreform und/oder die dritte Subpreform und/oder die vierte Subpreform und/oder die fünfte Subpreform mehrere, bspw. 3, 4, 5, 6, 7, 8 oder mehr Lagen aus NCF besitzt / besitzen.

Es ist zweckmäßig, wenn der eingesetzte Füllkern ein Roving-Bündel ist. Unter "Rovings" werden Faserfilamente, insbesondere Chemiefaser-Filamente verstanden. Als "Roving" wird hier ein Bündel, Strang oder Multifilamentgarn aus parallel angeordneten Filamenten / Endlosfasern verstanden. Der Querschnitt eines "Rovings" ist häufig elliptisch oder rechteckig. Solche Rovings, die eine leichte Schutzdrehung, bspw. fünf oder zehn Drehungen pro Meter aufweisen, sollen hier mit umfasst sein, wodurch der Querschnitt runder wird. Insbesondere solche Filamente aus Glas, Aramid oder Kohlenstoff bilden dabei einen Roving.

Das Steifigkeits- / Gewichtsverhältnis ist dann besonders vorteilhaft, wenn die erste Subpreform und/oder die fünfte Subpreform mindestens 4-, 5- oder 6-lagig aufgewickelt / aufgebaut ist und/oder die zweite Subpreform mindestens 5-, 6- oder 7-lagig aufgewickelt / aufgebaut ist.

Wenn die aneinander direkt anliegenden / befestigten / verbundenen Subpreformen vollständig oder teilweise über einen vorzugsweise thermisch aktivierten Binder unverrutschbar aneinander befestigt sind, wird die Fertigung deutlich vereinfacht. Alternativ oder zusätzlich zu der Verbindung mittels Aktivierung des (vorzugsweise thermischen) Binders ist es auch von Vorteil, wenn die Subpreformen durch Einbringen einer (3D-) Naht miteinander verbunden sind.

Hinsichtlich des Herstellverfahrens des Felgenkörpers ist es ferner von Vorteil, wenn die erste Subpreform, die zweite Subpreform, die dritte Subpreform, die vierte Subpreform und die fünfte Subpreform gleichzeitig mit Harz infiltriert werden und diese fünf Bestandteile gemeinsam ausgehärtet werden. Es bietet sich an, die fünf Subpreformen mittels einer RTM-Injektion mit Harz zu beschicken.

Die Erfindung wird nachfolgend auch mit Hilfe von Figuren erläutert, in denen einerseits die Vorrichtung, also die Fahrzeugfelge beschrieben wird und andererseits das Herstellverfahren beschrieben wird.

### Es zeigen:

- Fig. 1: eine schematische Längsschnittdarstellung eines Felgenkörpers einer nach einem bevorzugten Ausführungsbeispiel ausgebildeten, erfindungsgemäßen Fahrzeugfelge, womit verschiedene der Ausbildung des Felgenkörpers dienende Subpreformen dargestellt sind,
- Fig. 2: eine Detailansicht des im Längsschnitt dargestellten Felgenkörpers aus Fig. 1 im Bereich eines zur Anbindung eines Felgensterns vorbereiteten Flanschbereiches,
- Fig. 3: eine weitere Detailansicht des im Längsschnitt dargestellten Felgenkörpers aus Fig. 1, wobei nun der Verlauf der Faserlagen der verschiedenen Subpreformen im Bereich des Flanschbereiches zu erkennen ist,
- Fig. 4: eine Vorderansicht des gesamten Felgenkörpers, wobei die Erstreckung des Flanschbereiches gut zu erkennen ist,
- Fig. 5: eine Vorderansicht einer Fahrzeugfelge aufweisend den Felgenkörper der Figuren 1 bis 4 und einen an dem Flanschbereich des Felgenkörpers befestigten Felgenstern,
- Fig. 6: eine Rückansicht der Fahrzeugfelge der Fig. 5 zur Veranschaulichung einer den Felgenstern an dem Flanschbereich festlegenden Schraubverbindung, sowie
- Fig. 7: ein Flussdiagramm zur Veranschaulichung eines Herstellverfahrens für die Fahrzeugfelge der Figuren 1 bis 4.

Die Figuren sind lediglich schematischer Natur und dienen nur dem Verständnis der Erfindung. Die gleichen Elemente sind mit denselben Bezugszeichen versehen.

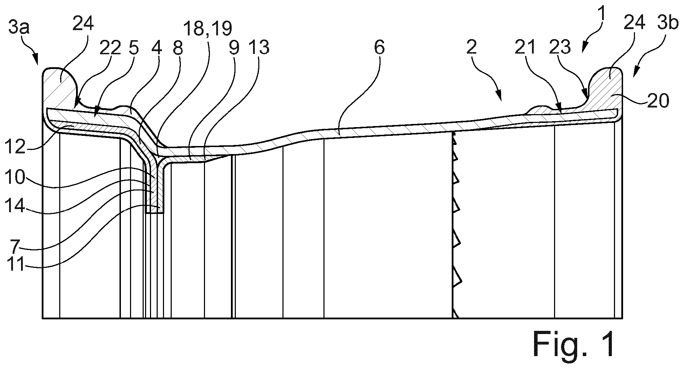

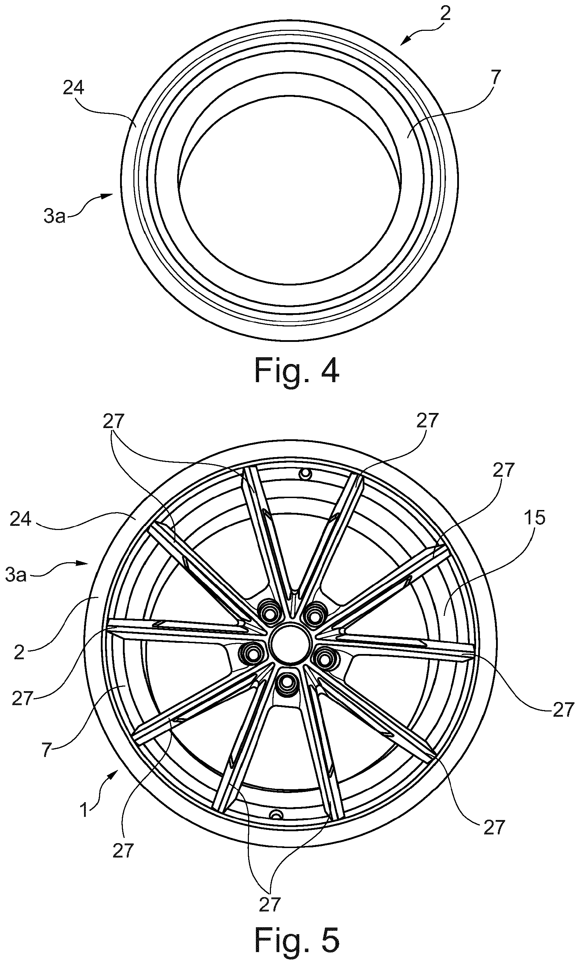

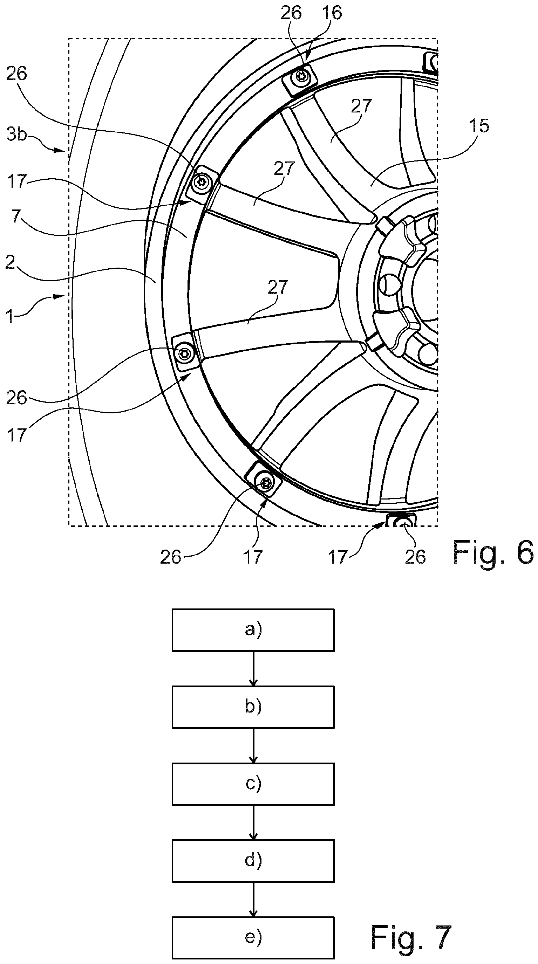

In den Figuren 5 und 6 ist eine erfindungsgemäße Fahrzeugfelge 1 dargestellt. Sie besitzt einen in den Figuren 1 bis 4 hinsichtlich seines Aufbaus näher dargestellten Felgenkörper 2. Der Felgenkörper 2 ist aus im Endzustand ausgehärtetem Faserverbundmaterial, aufweisend Verstärkungsfasern in Form von Verstärkungsfäden, bspw. Kohlefaser-, Glasfaser- und/oder Aramidfaserfäden, eingebettet in einer Harzmatrix, aufgebaut. Auch Mischungen der unterschiedlichen Fäden sind möglich. Der Felgenkörper 2 setzt sich aus einer Vielzahl von Einzelteilen zusammen, umfassend eine erste Subpreform 4, eine zweite Subpreform 6, eine dritte Subpreform 8, eine vierte Subpreform 9 sowie eine fünfte Subpreform 20.

Die erste Subpreform 4 und die fünfte Subpreform 20 sind so umgestülpt / umgekrempelt / umgeschlagen, dass sich in dessen Inneren ein (vorderer) erster Verbindungshohlraum 5 (der ersten Subpreform 4), respektive ein (hinterer) zweiter Verbindungshohlraum 21 (der fünften Subpreform 20) bildet. Diese beiden Verbindungshohlräume 5 und 21 sind Hohlräume, die durch das Material der entsprechenden ersten Subpreform 4 respektive fünften Subpreform 20 gebildet sind. In den beiden Verbindungshohlräume 5 und 21 sind Enden der zweiten Subpreform 6 angeordnet / eingesetzt, wobei diese Enden mit dem Bezugszeichen 22 und 23 versehen sind.

Zwischen dem ersten Ende 22 der zweiten Subpreform 6 und dem Material der ersten Subpreform 4 respektive dem zweiten Ende 23 der zweiten Subpreforms 6 und dem Material der dritten Subpreform 8 befindet sich Harz / ein Harzgemisch. Dieses Harz ist dasselbe Harz, das alle fünf Subpreformen 4, 6, 8, 9 und 20 durchtränkt und im ausgehärteten Zustand verbindet.

Zur Herstellung der Subpreformen 4, 6, 8, 9 und 20 und der Vorbefestigung der Subpreformen 4, 6, 8, 9 und 20 aneinander wird ein Binderpulver verwendet. Das Harz kommt erst bei der Injektion der gesamten, schon zusammen gesetzten Form des Felgenkörpers 2 bei der RTM-Injektion dazu. Das Binderpulver löst sich dann während der Injektion im Harzgemisch auf.

Das erste Ende 22 und/oder das zweite Ende 23 können an der jeweiligen ersten Subpreform 4 oder fünften Subpreform 20 mit einer (3D-)Naht zusätzlich oder alternativ zu dem in den Verbindungshohlräumen 5 oder 21 enthaltenem Harz angebunden sein.

Ein später auf dem Felgenkörper 2 zu befestigender Reifen wird auf übliche Weise durch Felgenhörner 24 des Felgenkörpers 2 abgestützt. Ein erstes axiales Ende 3a des Felgenkörpers 2 wird unmittelbar durch die erste Subpreform 4 mit ausgebildet. Im Bereich dieses ersten axialen Endes 3a ist unmittelbar ein Felgenhorn 24 des Felgenkörpers 2 durch die erste Subpreform 4 ausgeformt. Ein zweites axiales Ende 3b des Felgenkörpers 2 wird unmittelbar durch die fünfte Subpreform 20 mit ausgebildet. Im Bereich dieses zweiten axialen Endes 3b ist unmittelbar ein weiteres Felgenhorn 24 des Felgenkörpers 2 durch die fünfte Subpreform 20 ausgeformt. Zur Verstärkung des jeweiligen Felgenhorns 24 sind auf übliche Weise bevorzugt Roving-Bündel mit in die erste Subpreform 4 respektive in die fünfte Subpreform 20 eingearbeitet.

Zudem sei darauf hingewiesen, dass mehrere Lagen aus einem (einzigen) NCF-Material 25 verwendet sind. Bevorzugt ist ein Biaxialgelege mit +/- 45°-Fäden eingesetzt.

Enden / Kanten des NCF-Materials 25 sind in einer besonderen Ausführungsform aber nicht umgeklappt, sondern liegen einfach an der gleichen Stelle übereinander oder mit einem Versatz. Das Zusammenstecken der ersten Subpreform 4 und der fünften Subpreform 20 mit der zweiten Subpreform 6 erfolgt bevorzugt gleichzeitig mit dem Umstülpen.

Ferner sind erfindungsgemäß zwei weitere Subpreformen, nämlich eine dritte Subpreform 8 und eine vierte Subpreform 9, vorhanden, die dazu dienen, einen von der zweiten Subpreform 6 aus radial nach innen abstehenden Flanschbereich 7 des Felgenkörpers 2 unmittelbar mit auszuformen. Näher betrachtet weisen die dritte Subpreform 8 und die vierte Subpreform 9 jeweils einen von der sich axial erstreckenden zweiten Subpreform 6 aus radial nach innen vorspringenden, den Flanschbereich 7 unmittelbar mit ausbildenden Kragen 10, 11 auf. Die Krägen 10, 11 liegen unmittelbar aneinander an und sind im fertig hergestellten Zustand unmittelbar miteinander verklebt. Die Krägen 10, 11 weisen die gleichen Innendurchmesser auf.

Die dritte Subpreform 8 und die vierte Subpreform 9 weisen jeweils einen (von ihrem jeweiligen Kragen 10, 11 aus) axial vorspringenden Ringabschnitt 12, 13 (auch als Befestigungsabschnitt bezeichnet) auf, der direkt mit der zweiten Subpreform 6 verbunden ist. Insbesondere verlaufen die Ringabschnitte 12, 13 der dritten Subpreform 8 und der vierten Subpreform 9 zu einander entgegengesetzte axialen Richtungen von dem Flanschbereich 7 aus weg.

Ferner ist zu erkennen, dass die dritte Subpreform 8 mit ihrem Ringabschnitt 12 ebenfalls in den ersten Verbindungshohlraum 5 eingeschoben und dort befestigt / verankert ist. Somit ist die dritte Subpreform 8 seitens ihres Ringabschnittes 12 radial von innen von der ersten Subpreform 4 bedeckt. Mit anderen Worten wird die dritte Subpreform 8 zumindest teilweise von der ersten Subpreform 4 überragt / überlappt.

Es sei darauf hingewiesen, dass die erste Subpreform 4 auch den Kragen 10 der dritten Subpreform 8 überragt / überlappt. Die erste Subpreform 4 weist somit einen eigenen Kragen 14 auf, der über die zweite Subpreform 6 hinweg radial nach innen absteht. Der Kragen 14 der ersten Subpreform 4 dient ebenfalls dazu, den Flanschbereich 7 mit auszubilden. Der Kragen 14 der ersten Subpreform 4 bildet zusammen mit den Krägen 10, 11 der dritten Subpreform 8 und der vierten Subpreform 9 den Flanschbereich 7 aus. Der Kragen 14 der ersten Subpreform 4 verläuft so weit radial nach innen, dass er denselben Innendurchmesser aufweist wie die Krägen 10, 11 der dritten Subpreform 8 und der vierten Subpreform 9.

Mit anderen Worten ist daher die dritte Subpreform 8 sowohl an der ersten Subpreform 4, als auch an der zweiten Subpreform 6 befestigt / angeklebt.

Der Ringabschnitt 13 der vierten Subpreform 9 hingegen ist (axial) außerhalb des ersten Verbindungshohlraums 5 angeordnet und dort mit der zweiten Subpreform 6 verklebt.

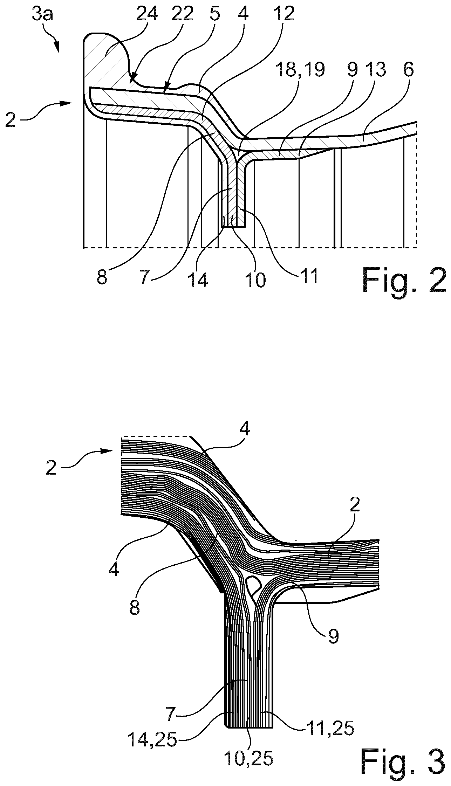

Es ist in Fig. 3 zu erkennen, dass der Aufbau der dritten Subpreform 8 und der vierten Subpreform 9 dem der anderen Subpreformen 4, 6, 20 weitestgehend ähneln / gleichen. Auch die dritte Subpreform 8 und die vierte Subpreform 9 weisen jeweils mehrere Lagen aus einem (einzigen) NCF-Material 25 auf, dessen Erstreckung im Querschnitt der L-Form der dritten Subpreform 8 bzw. der vierten Subpreform 9 folgen.

Ferner ist in Fig. 2 gut zu erkennen, dass sich in einem Ringraum 18 zwischen der zweiten Subpreform 6 einerseits sowie der dritten Subpreform 8 und der vierten Subpreform 9 andererseits ein Füllkern 19, hier in Form eines Faserbündels / Roving-Bündels, eingelegt ist. Der Füllkern 19 befindet sich radial auf Höhe des Übergangs zwischen dem jeweiligen (ausschließlich radial verlaufenden) Kragen 10, 11 der dritten und vierten Subpreform 8, 9 und dem daran anschließenden, axial verlaufenden Ringabschnitt 12, 13.

Mit den Figuren 4 bis 6 ist schließlich die gesamtheitliche Fahrzeugfelge 1 (Kfz-Felge) veranschaulicht. Ein aus Metall, hier aus einer Aluminiumlegierung, bestehender Felgenstern 15 ist mittels einer Schraubverbindung 16 an dem Flanschbereich 7 befestigt ist. Hierzu wird gemäß Fig. 6 der Felgenstern 15 an jedem radial äußeren Endbereich seiner Speichen 27 mit entsprechenden Schraubelementen 26 an dem Flanschbereich 7 befestigt. Hierzu ist der Flanschbereich 7 je Speiche 27 mit einem Schraubenaufnahmeloch 17 (als axiales Durchgangsloch) versehen, durch das das Schraubelement 26 hindurchragt.

Der Flanschbereich 7 ist ferner an jener Stelle von den Schraubenaufnahmelöchern 17 durchdrungen, an der sich die Krägen 12, 13 der dritten Subpreform 8 sowie der vierten Subpreform 9 und weiterhin auch der Kragen 14 der ersten Subpreform 4 radial überlappen.

In Verbindung mit Fig. 7 sei auch auf ein erfindungsgemäßes Herstellverfahren des Felgenkörpers 2 hingewiesen.

Dabei wird die zweite Subpreform 6 mit der fünften Subpreform 20 verbunden, wobei insbesondere die zweite Subpreform 6 in den zweiten Verbindungshohlraum 21 der fünften Subpreform 20 eingesetzt wird (Schritt a)).

Danach wird die vierte Subpreform 9 auf die zweiten Subpreform 6 miteinander verbunden (Schritt b)). Schritt a) und b) können prinzipiell auch umgekehrt zeitlich nacheinander erfolgen oder auch zeitgleich / parallel durchgeführt werden.

Im Anschluss daran wird in einem optionalen Schritt c) der Füllkern 19 auf der zweiten Subpreform 6 aufgebracht / befestigt, etwa aufgenäht oder aufgeklebt.

Dann wird die erste Subpreform 4 angeordnet, wobei die zweite Subpreform 6 auf der ersten Subpreform 4 festgelegt wird (Schritt d)). Die zweite Subpreform 6 erstreckt sich dabei von der ersten Subpreform 4 axial zu dem zweiten axialen Ende 3b des Felgenkörpers 2 weg. Zudem wird zugleich oder im Anschluss daran die dritte Subpreform 8 angeordnet und auf der zweiten Subpreform 6 angeordnet und vorfixiert. Dementsprechend wird die erste Subpreform 4 dann so umgelegt, dass die zweite Subpreform 6 sowie die dritte Subpreform 8 in dem ersten Verbindungshohlraum 5 der ersten Subpreform 4 eingesetzt sind (Schritt e)). Schritt d) und e) können prinzipiell zeitlich nacheinander erfolgen oder auch zeitgleich / parallel durchgeführt werden.

In einem fertig fixierten und drapierten Zustand der Subpreformen 4, 6, 8, 9, 20 sind schließlich auch die dritte Subpreform 8 und die vierte Subpreform 9 derart angeordnet, dass sie den radial nach innen abstehenden, zur Anbindung des Felgensterns 15 vorbereiteten Flanschbereich 7 mit ausbilden. Schließlich wird die RTM-Injektion durchgeführt und der Felgenkörper 2 ausgehärtet. Es können prinzipiell noch weitere Lagen oder Schichten auf die genannten Subpreformen 4, 6, 8, 9, 20 aufgebracht werden. Hier kann man konkret sagen, dass aus optischen Gründen meist ein Carbongewebe als äußerste Lage aufgebracht werden kann.

Zur Herstellung der fertigen Fahrzeugfelge 1 findet danach noch das Ankoppeln des Felgensterns 15 / Radsterns an den Felgenkörper 2 statt.

### Bezugszeichenliste

- 1: Fahrzeugfelge
- 2: Felgenkörper
- 3a: erstes axiales Ende des Felgenkörpers
- 3b: zweites axiales Ende des Felgenkörpers
- 4: erste Subpreform
- 5: erster Verbindungshohlraum
- 6: zweite Subpreform
- 7: Flanschbereich
- 8: dritte Subpreform
- 9: vierte Subpreform
- 10: Kragen der dritten Subpreform
- 11: Kragen der vierten Subpreform
- 12: Ringabschnitt der dritten Subpreform
- 13: Ringabschnitt der vierten Subpreform
- 14: Kragen der ersten Subpreform
- 15: Felgenstern
- 16: Schraubverbindung
- 17: Schraubenaufnahmeloch
- 18: Ringraum
- 19: Füllkern
- 20: fünfte Subpreform
- 21: zweiter Verbindungshohlraum
- 22: erstes Ende der zweiten Subpreform
- 23: zweites Ende der zweiten Subpreform
- 24: Felgenhorn
- 25: NCF-Material
- 26: Schraubelement
- 27: Speiche

## Patentansprüche

1. Fahrzeugfelge (1) mit einem Felgenkörper (2) aus Faserverbundmaterial, wobei der Felgenkörper (2) wiederum eine, ein erstes axiales Ende (3a) bildende, erste Subpreform (4) und eine in einem Verbindungshohlraum (5) der ersten Subpreform (4) aufgenommene, von der ersten Subpreform (4) zu einem, dem ersten axialen Ende (3a) gegenüberliegenden, zweiten axialen Ende (3b) verlaufende zweite Subpreform (6) aufweist, wobei ferner ein axial zwischen den axialen Enden (3a, 3b) ausgebildeter, radial nach innen abstehender Flanschbereich (7) zumindest teilweise aus einer mit der ersten Subpreform (4) und / oder der zweiten Subpreform (6) verbundenen, dritten Subpreform (8) gebildet ist.

2. Fahrzeugfelge (1) nach Anspruch 1, **dadurch gekennzeichnet, dass** der Flanschbereich (7) aus einer weiteren vierten Subpreform (9) mit ausgebildet ist.

3. Fahrzeugfelge (1) nach Anspruch 2, **dadurch gekennzeichnet, dass** die dritte Subpreform (8) und die vierte Subpreform (9) jeweils einen radial nach innen vorspringenden, den Flanschbereich (7) unmittelbar mit ausbildenden Kragen (10, 11) aufweisen.

4. Fahrzeugfelge (1) nach einem der Ansprüche 1 bis 3, **dadurch gekennzeichnet, dass** die dritte Subpreform (8) und / oder die vierte Subpreform (9) einen im Wesentlichen axial vorspringenden Ringabschnitt (12, 13) aufweisen / aufweist, welcher Ringabschnitt (12, 13) mit der ersten Subpreform (4) und / oder der zweiten Subpreform (6) verbunden ist.

5. Fahrzeugfelge (1) nach Anspruch 4, **dadurch gekennzeichnet, dass** die Ringabschnitte (12, 13) der dritten Subpreform (8) und der vierten Subpreform (9) zu einander entgegengesetzte axialen Richtungen von dem Flanschbereich (7) aus weg verlaufen.

6. Fahrzeugfelge (1) nach einem der Ansprüche 1 bis 5, **dadurch gekennzeichnet, dass** die dritte Subpreform (8) in dem Verbindungshohlraum (5) der ersten Subpreform (4) mit angeordnet ist.

7. Fahrzeugfelge (1) nach einem der Ansprüche 1 bis 6, **dadurch gekennzeichnet, dass** die erste Subpreform (4) einen radial nach innen abstehenden Kragen (14) aufweist, der den Flanschbereich (7) mit ausbildet.

8. Fahrzeugfelge (1) nach einem der Ansprüche 1 bis 7, **dadurch gekennzeichnet, dass** ein aus Metall bestehender Felgenstern (15) mittels einer Schraubverbindung (16) an dem Flanschbereich (7) befestigt ist.

9. Fahrzeugfelge (1) nach einem der Ansprüche 1 bis 8, **dadurch gekennzeichnet, dass** der Flanschbereich (7) an einer Stelle von Schraubenaufnahmelöchern (17) durchdrungen ist, an der sich die Krägen (12, 13) der dritten Subpreform (8) sowie der vierten Subpreform (9) radial überlappen.

10. Fahrzeugfelge (1) nach einem der Ansprüche 1 bis 9, **dadurch gekennzeichnet, dass** in einem Ringraum (18) zwischen der zweiten Subpreform (6) einerseits sowie der dritten Subpreform (8) und/oder der vierten Subpreform (9) andererseits ein Füllkern (19) eingelegt ist.

11. Verfahren zum Herstellen eines Felgenkörpers (2) aus Faserverbundmaterial für eine Fahrzeugfelge (1), wobei eine eine Verstärkungsfaser aufweisende erste Subpreform (4) unter Ausbildung eines ersten axialen Endes (3a) des Felgenkörpers (2) angeordnet wird und eine zweite Subpreform (6) in einen Verbindungshohlraum (5) der ersten Subpreform (4) eingesetzt wird, wobei sich die zweite Subpreform (6) von der ersten Subpreform (4) axial zu einem zweiten axialen Ende (3b) des Felgenkörpers (2) weg erstreckt, und wobei eine dritte Subpreform (8) an die erste Subpreform (4) und/oder die zweite Subpreform (6) angebracht wird, sodass diese einen radial nach innen abstehenden, zur Anbindung eines Felgensterns (15) vorbereiteten Flanschbereich (7) mit ausbildet.
